# EUROPÄISCHE PATENTANMELDUNG

(11) **EP 4 557 033 A1**
(43) Veröffentlichungstag der Anmeldung: **21.05.2025**
(21) Anmeldenummer: 24187142.5
(22) Anmeldetag: 08.07.2024
(51) Int. Cl.: G05B 23/02, B41F 33/00

(54) **COMPUTERIMPLEMENTIERTES VERFAHREN ZUR ANOMALIEERKENNUNG**

(30) Priorität: 15.11.2023 DE 102023131836
(71) Anmelder: manroland Goss web systems GmbH, 86153 Augsburg (DE)
(72) Erfinder: Sailer, Alexander, 86441 Zusmarshausen (DE)

(57) **Zusammenfassung**

Computerimplementiertes Verfahren zur Anomalieerkennung.

Die Erfindung betrifft ein computerimplementiertes Verfahren zur Auswertung von Daten, wobei das Verfahren umfasst: Empfangen eines Datensatzes (20) von mindestens einer Komponente einer Druckmaschine oder einer druckverarbeitenden Maschine, wobei der Datensatz (20) eine erste Größe (1) mit einer Vielzahl von ersten Datenpunkten (11) und mindestens eine zweite Größe (2) mit einer Vielzahl von zweiten Datenpunkten (12) umfasst, Durchführen einer computerimplementierten Anomalieerkennung der ersten Datenpunkte (11) der ersten Größe (1) zur Ermittlung mindestens einer Anomalie.

Der Erfindung liegt somit die Aufgabe zugrunde, eine Lösung zu finden, bei welcher die Anomalieerkennung für unterschiedliche Produktionszustände und bei Einsatz unterschiedlicher Verbrauchsmaterialien anwendbar ist.

Die Aufgabe wird erfindungsgemäß dadurch gelöst, dass bei der computerimplementierten Anomalieerkennung der ersten Datenpunkte (11) der ersten Größe (1) mindestens die zweiten Datenpunkte (12) der zweiten Größe (2) berücksichtigt werden.

## Beschreibung

Die Erfindung betrifft ein computerimplementiertes Verfahren zur Auswertung von Daten, wobei das Verfahren umfasst: Empfangen eines Datensatzes von mindestens einer Komponente einer Druckmaschine oder einer druckverarbeitenden Maschine, wobei der Datensatz eine erste Größe mit einer Vielzahl von ersten Datenpunkten und mindestens eine zweite Größe mit einer Vielzahl von zweiten Datenpunkten umfasst, Durchführen einer computerimplementierten Anomalieerkennung der ersten Datenpunkte der ersten Größe zur Ermittlung mindestens einer Anomalie.

Druckmaschinen und druckverarbeitende Maschinen sind technisch hochkomplexe Einrichtungen, bei denen vielzählige Funktionen ausführbar und zueinander abgestimmt ablaufen müssen. Darüber hinaus werden damit Substrate wie beispielsweise Papierbahnen, Bahnen aus Kunststofffolien oder vereinzelte Bögen verarbeitet, welche einerseits unterschiedliche Eigenschaften aufweisen und teilweise sehr empfindlich auf beispielsweise Bahnspannungsschwankungen reagieren. Gleichzeitig ist zum Erzeugen eines fehlerfreien Druckbildes und/oder zur Ausführung eines lagegenauen Schnittes oder Falzes eine extrem hohe Präzision der dort eingesetzten Komponenten erforderlich, weshalb derartige Maschinen eine sehr umfangreiche und komplexe Steuerung aufweisen.

Gleichzeitig besteht die Forderung an derartige Maschinen, auch aufgrund der zumeist fristgebunden herzustellenden Produkte eine sehr hohe Verfügbarkeit aufzuweisen, so dass Stillstandszeiten und Störungen vermieden oder zumindest minimiert werden müssen.

Insofern ist es das Bestreben, sowohl Stillstände als auch Fehlermeldungen, welche teilweise zu einem Maschinenstillstand führen, zu vermeiden. Eine Fehlermeldung tritt ein, wenn eine in der Maschine ermittelte Größe einen zulässigen Grenzwert überschreitet. Vielmehr ist es die Aufgabe der Erfindung, die Entstehung von klassischen Fehlermeldungen zu vermeiden und durch computerimplementierte Analyse relevanter Größen entsprechende Anomalien zu erkennen, um so frühzeitig und präventiv Rückschlüsse auf Veränderungen der Maschine oder einer Komponente oder auf das Verhalten der Maschine oder einer Komponente ziehen zu können, noch bevor Störungen oder Fehlermeldungen auftreten.

Allerdings sind bei einer Druckmaschine oder bei einer komplexen Komponente der graphischen Industrie und die vielzähligen Einflussgrößen und Zusammenhänge die aus dem Stand der Technik bekannten Verfahren der Anomalieerkennung an einer einzeln für sich betrachteten Größe hierbei nicht zielführend, da aufgrund unterschiedlicher Produktionsanforderungen, unterschiedlicher Produktionszustände, unterschiedlich eingesetzter Druckstoffe und Hilfsmittel einzelne Größen stark variieren können.

Der Erfindung liegt somit die Aufgabe zugrunde, eine Lösung zu finden, bei welcher die Anomalieerkennung für unterschiedliche Produktionszustände und bei Einsatz unterschiedlicher Verbrauchsmaterialien anwendbar ist.

Die Aufgabe wird erfindungsgemäß dadurch gelöst, dass bei der computerimplementierten Anomalieerkennung der ersten Datenpunkte der ersten Größe mindestens die zweiten Datenpunkte der zweiten Größe berücksichtigt werden.

Diese Lösung bietet den Vorteil, dass damit der Verlauf der ersten Größe und somit die Definition, was ein normaler Verlauf der ersten Größe ist und was folglich eine Anomalie dieser Größe darstellt, in den Kontext mindestens einer zweiten Größe der Maschine gebracht wird. Somit erfolgt die Anomalieerkennung der ersten Größe in Abhängigkeit von dem Wert und/oder der Veränderung des Wertes mindestens einer zweiten Größe, wobei die zweite Größe auch ein spezifischer Zustand oder eine spezifische Betriebsart sein kann, da die erste Größe bei einer sich geänderten oder sich ändernden zweiten Größe einen anderen oder geänderten normalen Verlauf aufweisen kann. Eine derartige erfindungsgemäße Anomalieerkennung ist bei einer univariaten Anomalieerkennung nicht möglich, da dort nur eine Größe für sich betrachtet auf das Auftreten von Anomalien untersucht wird, so dass Zusammenhänge unterschiedlicher Größen, Parameter oder Maschinenzustände mit diesem Verfahren, insbesondere mit einem computerimplementierten Verfahren nicht berücksichtigt werden können.

Ferner weist das erfindungsgemäße Verfahren gegenüber einer multivariaten Anomalieerkennung den Vorteil auf, dass nicht gleichzeitig zwei oder mehr Größen simultan auf Anomalien hin untersucht werden müssen, was zum einen die Auswertegeschwindigkeit erhöht und gleichzeitig die erforderliche Rechenkapazität reduziert, zumal die zweite Größe wie beispielsweise der Sachverhalt, ob sich ein Druckwerk in Druck-An-Stellung oder in einer Druck-Ab-Stellung befindet, nur zwei Werte ohne entsprechende Anomalien aufweisen kann oder aber die zweite Größe während einer Produktion nur einen unveränderlichen Wert, wie beispielsweise die Bahnbreite des zu verarbeitenden Substrats, annehmen kann, so dass die zweite Größe auch teilweise keine Anomalie aufweisen kann, die zweite Größe aber für den normalen Verlauf der ersten Größe von entscheidender Bedeutung sein kann.

Gemäß einer Ausgestaltung der Erfindung wird die mindestens eine erkannte Anomalie der ersten Größe mit dem zugehörigen Datenpunkt der mindestens zweiten Größe angezeigt und/oder abgespeichert und/oder auf sonstige Art elektronisch dokumentiert oder hinterlegt.

Diese Ausgestaltung weist den Vorteil und die Besonderheit auf, dass damit eine Bewertung der Anomalien der ersten Größe, beispielsweise hinsichtlich deren Umfang, Häufigkeit und des Verlaufes, im Kontext mindestens der zweiten Größe möglich ist. Somit können Betriebszustände oder Maschinenzustände hinsichtlich deren Auswirkungen auf das Auftreten von Anomalien der ersten Größe betrachtet werden.

Gemäß einer weiteren Ausgestaltung der Erfindung wird der zeitliche Verlauf der ersten Größe vor und/oder nach einer erkannten Anomalie und der zeitliche Verlauf der zweiten Größe vor und/oder nach einer erkannten Anomalie dargestellt und/ oder abgespeichert und/oder auf sonstige Art elektronisch dokumentiert oder hinterlegt.

Diese Ausgestaltung weist den Vorteil auf, dass damit ein zeitlicher Zusammenhang im Falle einer Veränderung der zweiten Größe und dem sich daraus ergebenden anomalen Verhaltens der ersten Größe analysiert und ausgewertet werden kann. Ferner ist es dadurch möglich, dass die zeitliche Veränderung und zeitliche Zusammenhänge im Falle der Veränderung der zweiten Größe und die Einflussnahme auf die erste Größe damit automatisiert analysiert werden kann, um gegebenenfalls daraus resultierende Makulaturanfälle zu reduzieren.

Gemäß einer weiteren vorteilhaften Ausgestaltung der Erfindung wird die mindestens eine Anomalie der ersten Größe als Fehlermeldung gekennzeichnet, wenn diese einen vorbestimmten Schwellenwert überschreitet.

Diese Ausgestaltung bietet den Vorteil, dass damit nur die Anomalien der ersten Größe herausgefiltert und bewertet werden können, welche ein signifikantes Ausmaß annehmen und somit entweder bereits Störungen verursachen oder zumindest Störungen der Produktion verursachen können. Somit wird die anfallende Datenmenge und die Kapazität für eine detaillierte Auswertung deutlich gesenkt.

Bevorzugte Weiterbildungen der Erfindung ergeben sich aus den Unteransprüchen und der nachfolgenden Beschreibung. Verschiedene Ausführungsbeispiele der Erfindung werden, ohne hierauf beschränkt zu sein, an Hand der Zeichnungen näher erläutert. Dabei zeigt:
- Fig. 1: Ein beispielhafter Datensatz mit einer ersten, zweiten und dritten Größe
- Fig. 2: Ein beispielhafter Datensatz mit einer ersten, zweiten und dritten Größe
- Fig. 3: Ein beispielhafter Datensatz mit einer ersten und zweiten Größe
- Fig. 4: Eine Anomalieerkennung mit einem Schwellenwert
- Fig. 5: Eine zeitliche Aufteilung eines Datensatzes

An einer Druckmaschine oder einer Maschine der graphischen Industrie werden vielzählige Sensoren eingesetzt und/oder die bereits vorliegenden Größen wie Stromaufnahme der Motoren, die Drehzahl der Motoren, Drehmomente der Motoren, die Bahnspannung, Bahnverläufe in oder senkrecht zur Transportrichtung, die Farbdichte, die Passerhaltigkeit und/oder die Registerhaltigkeit des Druckbildes und viele weitere Größen erfasst oder ermittelt.

Die hierbei erfassten oder ermittelten Größen verlaufen jedoch nicht immer statisch auf ihrem Nennwert konstant über die Zeit, vielmehr umfasst der so erfasste oder ermittelte Datensatz von jeder Größe eine Vielzahl von Datenpunkten, wobei die ermittelten Größen häufig eine gewisse Schwankung und somit eine gewisse Streuung um ihren Nennwert aufweisen.

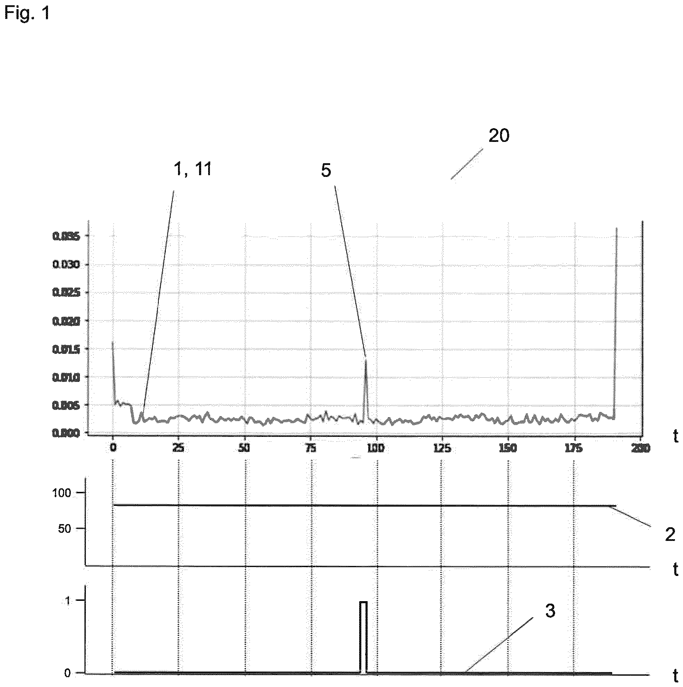

Fig. 1 zeigt den Verlauf einer derartigen ersten Größe 1 am Beispiel eines Antriebsmomentes eines Druckwerks-Antriebsmotors über die Zeit. Hierbei werden je Zeiteinheit eine definierte Anzahl von ersten Datenpunkten 11 erfasst oder ermittelt und über die Zeit aufgetragen, so dass der mit diesen Datenpunkten 11 der zeitliche Verlauf dieser ersten Größe 1, beispielhaft das Antriebsmoment, bestimmt, abgespeichert, aufgezeichnet oder beispielsweise graphisch dargestellt werden kann. Wie aus Fig. 1 ersichtlich, nimmt diese erste Größe einen gewissen Durchschnitts-Ist-Wert ein, um welchen diese erste Größe 1 schwankt.

In zumeist unregelmäßigen Abständen treten jedoch größere Abweichungen von diesem Durchschnitts-Ist-Wert auf, welche als Anomalie 5 dieser ersten Größe 1 bezeichnet wird. Eine derartige Anomalie 5 kann verschiedene Ursachen haben und ist abhängig von der dabei erreichten Abweichung vom Durchschnitts-Ist-Wert auch ohne Auswirkungen auf einen fehlerfreien und dauerhaften Betrieb der Anlage.

Allerdings können bei häufigeren und stärkeren Anomalien 5 einer ersten Größe 1 Rückschlüsse auf beispielsweise den Wartungszustand oder die erreichte Lebensdauer gezogen werden, weshalb die Erkennung derartiger Anomalien 5 wesentlich für die vorbeugende Wartung und somit für einen fehlerfreien Betrieb der Anlage ist.

Allerdings sind derartige erste Datenpunkte 11 und der somit bestimmte Verlauf der ersten Größe 1 zumeist nur bedingt aussagekräftig, sofern nicht bei Betrachtung der ersten Größe 1 und der Erkennung von Anomalien 5 der ersten Größe 1 mindestens eine zweite Größe 2 berücksichtigt wird. Deshalb wird die Erkennung von Anomalien 5 der ersten Größe 1 eben diese erste Größe 1 in Kontext mit mindestens einer zweiten Größe 2 gesetzt.

Fig. 1 zeigt somit einen Datensatz 20, welcher als erste Größe 1 beispielhaft das Antriebsmoment eines Druckwerkantriebes umfasst und gleichzeitig als zweite Größe 2 die relative Soll-Bahngeschwindigkeit und als dritte Größe 3 das Steuersignal für einen Rollenwechsler umfasst.

Da die Soll-Bahngeschwindigkeit als zweite Größe 2 bei dem in Fig. 1 dargestellten Beispiel einen konstanten Wert annimmt, ist die zweite Größe 2 über die Zeit konstant. Da während der Produktion ein Rollenwechsel erforderlich ist, da die ablaufende Substratrolle den minimalen Durchmesser erreicht hat und die Einleitung eines Rollenwechselvorganges erforderlich ist, ist die dritte Größe 3 in der ersten Hälfte der aufgezeichneten Produktion bei Null und nur zum Zeitpunkt des Rollenwechsels nimmt die dritte Größe 3 den Wert eins an.

Wie an dem in Fig. 1 beispielhaft dargestellten Beispiel zu erkennen ist, wäre die Analyse und Erkennung von Anomalien 5 der ersten Größe 1 ohne den Bezug der ersten Größe 1 insbesondere zur dritten Größe 3 nicht derart aussagekräftig, da bei rein isolierter Anomalieerkennung der ersten Größe 1 möglicherweise falsche Rückschlüsse auf die Funktionsweise oder den Wartungszustand des Antriebsmotors gezogen werden würden.

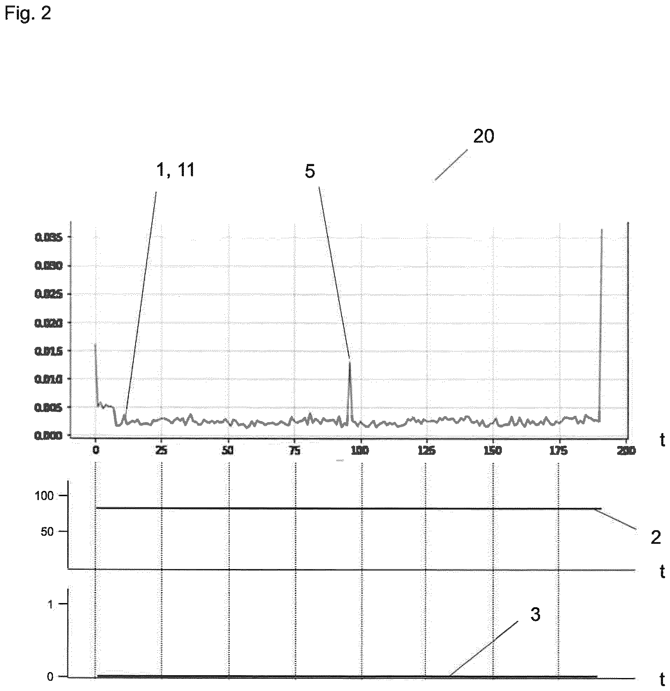

Fig. 2 zeigt zur Verdeutlichung des Vorteils der Erfindung das Beispiel aus Fig. 1, wonach die erste Größe 1 über eine definierte Zeitdauer hinsichtlich dem Auftreten von Anomalien 5 analysiert wird, und wobei der Datensatz 20 gleichzeitig als zweite Größe 2 die relative Soll-Bahngeschwindigkeit und als dritte Größe 3 das Steuersignal für einen Rollenwechsler enthält.

Dieses Beispiel zeigt den Fall, dass zum Zeitpunkt des Auftretens der Anomalie 5 der ersten Größe 1 die zweite Größe 2 aufgrund einer nicht geänderten Soll-Bahngeschwindigkeit weiterhin konstant ist und wobei beim Zeitpunkt des Auftretens der Anomalie 5 der ersten Größe 1 auch die dritte Größe 3 Null ist, so dass kein Rollenwechsler ausgelöst wurde.

Folglich ist der in Fig. 2 dargestellte Fall aus technischer Sicht gänzlich anders zu bewerten, als das in Fig. 1 dargestellte Beispiel. Bei dem in Fig. 1 dargestellten Beispiel ist die Anomalie 5 der ersten Größe 1 nämlich beispielsweise des Antriebsmomentes eines Druckwerkantriebes in Zusammenhang und somit als Folge eines Rollenwechsels zu sehen, um entweder die Bahnspannung wieder sehr kurzfristig zu korrigieren, oder die Drehmomentenspitze der Anomalie 5 kann die Folge des Durchlaufens der gegenüber der restlichen Substratbahn verdickten Klebestelle sein. Bei dem in Fig. 2 dargestellten Beispiel ist jedoch keine Veränderung der neben der ersten Größe 1 erfassten zweiten Größe 2 und dritten Größe 3 zu erkennen, weshalb es sich bei dem in Fig. 2 dargestellten Beispiel um eine technisch unbegründete Anomalie 5 handelt, welche somit zur Bewertung des Zustandes des Antriebsreglers oder des Antriebsmotors herangezogen werden kann.

Die in Fig. 1 und Fig. 2 dargestellten Beispiele zeigen auch den Vorteil der vorliegenden Erfindung gegenüber einer univariaten Anomalieerkennung, da bei einer univariaten Anomalieerkennung lediglich die erste Größe 1 für sich betrachtet und bewertet werden würde und somit keine Aussage möglich wäre, ob die ermittelte Anomalie 5 nicht doch die Folge einer definierten Ursache ist.

Eine multivariate Anomalieerkennung würde nach allgemeiner Definition weder den in Fig. 1 noch den in Fig. 2 beispielhaft dargestellten Fall als potentielle Anomalie erkennen. Bei dem in Fig. 1 dargestellten Beispiel tritt eine Anomalie 5 im Sinne eines anormalen Verhaltens gegenüber der restlichen Betrachtungszeit nur bei der ersten Größe 1 auf, nicht jedoch bei der zweiten Größe 2, da diese konstant ist, und auch nicht bei der dritten Größe 3, da es sich bei dem Befehl zum Rollenwechsel nicht um eine Anomalie 5, sondern um ein reguläres Signal der Maschinensteuerung handelt. Folglich ist die in Fig. 1 dargestellte Anomalie 5 nicht mit einer multivariaten Anomalieerkennung zu erkennen.

Auch der in Fig. 2 dargestellte Fall ist mit einer multivariaten Anomalieerkennung nicht als Anomalie 5 erkennbar, da die Anomalie 5 nur bei der ersten Größe 1, aber eben nicht in zeitlichem Zusammenhang mit einer Anomalie der zweiten Größe 2 und der dritten Größe 3 auftritt.

Das erfindungsgemäße Verfahren ermöglicht eine automatische Erkennung von tatsächlichen Anomalien 5, das heißt von anormalen Verläufen der ersten Größe 1, welche nicht die Folge einer bekannten Störgröße wie beispielsweise einem Rollenwechsler sind, da derartige technisch begründbare Ausschläge der ersten Größe herausgefiltert werden.

Ferner ist es möglich, durch Einsatz von künstlicher Intelligenz das Verfahren lernbar auszugestalten, so dass beispielsweise nicht nur zeitlich unmittelbar mit der Anomalie 5 zusammenhängende Veränderungen mindestens einer zweiten Größe 2, sondern auch in gewissen Grenzen zeitlich zur Anomalie 5 beabstandete Veränderungen mindestens einer zweiten Größe 2, wie beispielsweise der dritten Größe 3 am Beispiel der Figuren 1 und 2, als Ursache eines anormalen Verhaltens der ersten Größe 1 gefiltert werden können.

Somit ist es möglich, dass die mindestens eine erkannte Anomalie 5 der ersten Größe 1 mit dem einen oder der Mehrzahl von zugehörigen Datenpunkten 12 der zweiten Größe 2 darzustellen, anzuzeigen, abzuspeichern oder entsprechend zu dokumentieren, vorzugsweise elektronisch.

Ferner ist es somit auch möglich, den zeitlichen Verlauf der ersten Größe 1 vor und/oder nach einer erkannten Anomalie 5 und den zeitlichen Verlauf mindestens der zweiten Größe 2 vor und/oder nach einer erkannten Anomalie 5 darzustellen, anzuzeigen, abzuspeichern oder entsprechend zu dokumentieren, vorzugsweise elektronisch.

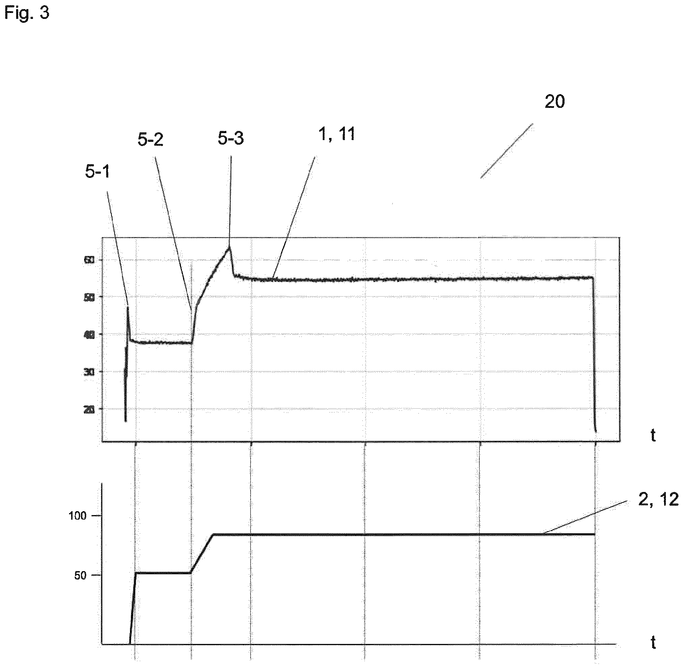

Fig. 3 zeigt einen beispielhaften Datensatz 20 welcher über die Zeit erste Datenpunkte 11 einer ersten Größe 1 aufgetragen hat, wobei die erste Größe 1 der Leistungsaufnahme eines Antriebsmotors eines Druckwerkes abbildet. Ferner umfasst der Datensatz 20 die über die Zeit aufgetragenen zweiten Datenpunkte 12 einer zweiten Größe 2, wobei die zweite Größe der Soll-Bahnspannung entspricht.

Für die erste Größe 1 erfolgt eine Anomalieerkennung zur Erkennung der dort auftretenden Anomalien 5 durch ein computerimplementiertes Verfahren. Hierbei werden durch das System mehrere Anomalien 5 ermittelt. Die erste Anomalie 5-1 ist nur von kurzer Dauer und stellt möglicherweise ein Überschwingen des Antriebes dar. Nach der ersten Anomalie 5-1 bleibt die Leistungsaufnahme stabil.

Nach einer Verweilzeit wird eine zweite Anomalie 5-2 erkannt, nämlich ein plötzlicher steiler Anstieg der Leistungsaufnahme als erste Größe 1, wobei nach dieser zweiten Anomalie 5-2 ein Anstieg der ersten Größe 1 erfolgt.

Nach dem Anstieg wird eine dritte Anomalie 5-3 in Form einer Leistungsspitze der ersten Größe 1 erkannt, nach dieser dritten Anomalie 5-3 erfolgt ein im Wesentlichen statischer Verlauf der ersten Größe 1.

Bei autarker Anomalieerkennung, wie diese aus dem Stand der Technik bekannt ist, wäre es sowohl für ein computerimplementiertes Verfahren zur Bewertung der ersten Anomalie 5-1, der zweiten Anomalie 5-2 und der dritten Anomalie 5-3 wenig sinnvoll, ebenso wäre die Bewertung und Auswertung dieser Anomalien 5-1, 5-2 und 5-3 durch ein computerimplementiertes Verfahren oder selbst durch einen Fachmann für sich alleine nicht zielführend.

Aufgrund des erfindungsgemäßen Hinzuziehens der Bahnspannung als zweiter Größe 2, ohne jedoch für diese zweite Größe ebenfalls eine Anomalieerkennung durchzuführen, ist es sowohl für ein computerimplementiertes Auswerteverfahren als auch für einen Fachmann möglich, diese Anomalien 5-1, 5-2 und 5-3 entsprechend zu bewerten und die richtigen Schlussfolgerungen daraus zu ziehen.

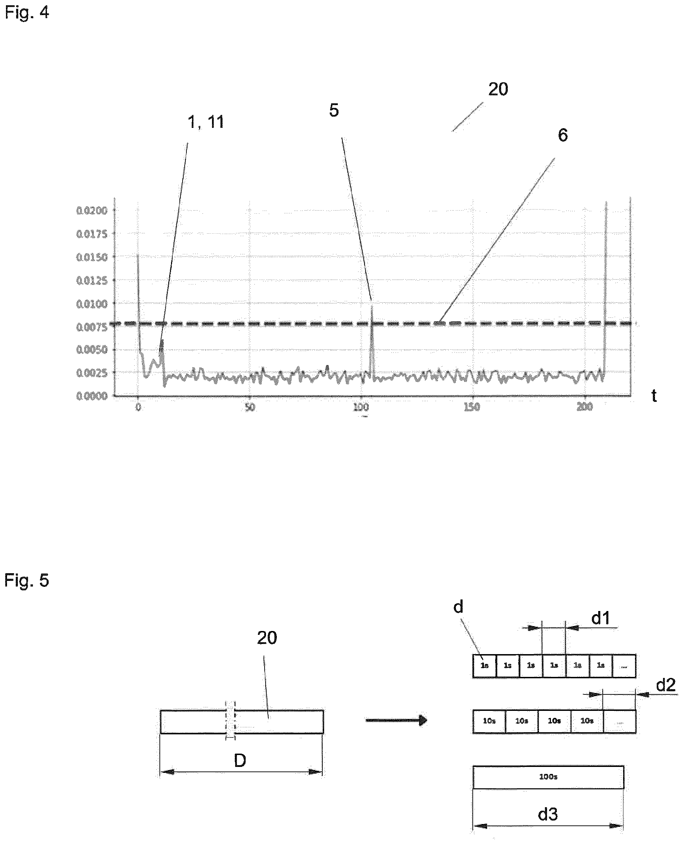

Fig. 4 zeigt den oberen Ausschnitt der Figuren 1 und 2, nämlich den zeitlichen Verlauf der Datenpunkte 11 der ersten Größe 1 mit einer darin aufgetretenen Anomalie 5.

Um zu vermeiden, dass zwar erste Datenpunkte 11 der ersten Größe mit anormalem Wert und/oder Verlauf gegenüber der Mehrzahl der ersten Datenpunkte 11 der ersten Größe 1 als relevante Anomalie 5 detektiert werden, kann ein anomaler Verlauf der ersten Größe 1 erst als Anomalie 5 gekennzeichnet und somit als solche erkannt oder dokumentiert oder abgespeichert oder dargestellt werden, wenn diese einen vorbestimmten Schwellenwert 6 überschreitet.

Dadurch ist es möglich, dass kleinere Abweichungen der ersten Größe 1 vom normalen Verhalten nicht als Anomalie 5 im eigentlichen Sinne definiert werden, um somit die Auswertungen nicht durch übliche Schwankungen, Meßtoleranzen oder durch ein Rauschen in der Datenübertragung nicht zu verfälschen.

Mit der so mindestens einen erkannten Anomalie 5 kann zusammen mit der entsprechenden ersten Größe 1 und mindestens der zweiten Größe 2 in einer Ausgestaltung der Erfindung ein Analysedatensatz generiert werden. Hierbei ist es irrelevant, ob die erkannten Anomalien 5 entsprechend den oben angeführten Ausgestaltungen gefiltert werden und ob darin nur die ersten Datenpunkte 11 der ersten Größe 1 und nur die relevanten Datenpunkte 12 mindestens der zweiten Größe 2 zum Zeitpunkt des Auftretens der Anomalie 5 enthalten sind oder ob der Verlauf der ersten Größe 1 und mindestens der zweiten Größe 2 vor und/oder nach einer erkannten Anomalie 5 enthalten sind.

Ein Analysedatensatz kann entweder einer gesamten Maschine oder nur einer Komponente zugewiesen werden, so dass eine Dokumentation der an dieser Maschine oder Komponente aufgetretenen Anomalien 5 über einen beliebigen Zeitraum möglich ist. Somit lässt sich das Verhalten dieser Maschine oder dieser Komponente hinsichtlich der Anomalien 5 über einen beliebigen Zeitraum analysieren, um beispielsweise Rückschlüsse über präventive Wartungen ziehen zu können.

Für die Anomalieerkennung der ersten Größe 1 kann ein KI-basiertes Softwaremodul wie beispielsweise ein Dense-Autoencoder oder ein LSTM-Autoencoder oder ein Isolation Forest verwendet werden. Derartige Software ist als Stand der Technik bekannt und von diversen Anbietern verfügbar, so dass lediglich der Zusammenhang mit der mindestens zweiten Größe 2 programmtechnisch einzubinden ist.

Fig. 5 zeigt in Beispiel, wonach ein auf der linken Seite beispielhaft dargestellter Datensatz 20 mit einer bestimmten Zeitdauer D zur Anomalieerkennung in eine Vielzahl von Zeitintervalle d unterteilt wird.

Hierbei ist es möglich, den Datensatz 20 mit der Zeitdauer D in Zeitintervalle d einer ersten Zeitdauer d1 und/oder einer zweiten Zeitdauer d2 und/oder einer dritten Zeitdauer d3 zu unterteilen. Hierdurch ist es bei geeigneter Wahl der ersten Zeitdauer d1, der zweiten Zeitdauer d2 und der dritten Zeitdauer d3 der Zeitintervalle d unterschiedliche Anomalietypen zu erkennen.

Bei einer kurzen ersten Zeitdauer d1, wie beispielsweise 1 bis 50 Sekunden, bevorzugt 1 bis 10 Sekunden, können beispielsweise globale Anomalien 5 erkannt werden.

Wird das Zeitintervall d verlängert, wie beispielsweise bei einer zweiten Zeitdauer d2, wie beispielsweise 10 bis 1000 Sekunden oder 10 bis 100 Sekunden, so können kontextuelle Anomalien 5 besser erkannt werden, da diese erst in einem größeren zeitlichen Zusammenhang erkannt werden können.

Wird das Zeitintervall d nochmals verlängert, wie beispielsweise bei einer dritten Zeitdauer d1, wie beispielsweise 10 bis 10 000 Sekunden oder 10 bis 1000 Sekunden oder aber die gesamte Dauer einer Produktion, so können kollektive Anomalien 5 erkannt werden. Bei einer derartigen kollektiven Anomalie sind einzelne Datenpunkte nicht auffällig, die kollektive Anomalie 5 kann häufig erst im Gesamtzusammenhang erkannt werden.

Es versteht sich von selbst, dass somit für den ein und denselben Datensatz auch die oben angeführten Anomaliearten gleichzeitig oder hintereinander durchgeführt werden können.

Die Zeitintervalle d können auch in einer anderen Größe als der Zeit beziehungsweise der Zeitdauer bestimmt werden. Alternativ zu einer Zeitdauer kann für die Zeitintervalle d beispielsweise eine bestimmte Anzahl von Überrollungen der Druckzylinder oder der Impulse der Antriebsregelung oder eine gewisse Anzahl von Datenpunkten aufweisen, abhängig von der Triggerrate der Datenerfassung.

Somit ist es beispielsweise möglich, dass die Zeitintervalle d eine erste Anzahl n1 und/oder eine zweite Anzahl n2 und/oder eine dritte Anzahl n3 von ersten Datenpunkten aufweisen.

Die erste Größe 1 und/oder mindestens die zweite Größe 2 sowie jede weitere erfasste Größe kann entweder mittels Sensoren erfasst werden, wie beispielsweise Spannungen oder Stromstärken oder kann rechnerisch ermittelt werden, wie beispielsweise das Drehmoment eines elektrischen Antriebsmotors, welches aus den relevanten elektrischen Kenngrößen des Antriebsmotors abgeleitet wird.

Als erste Größe 1 kann beispielsweise ein Antriebsmoment eines Motors oder eine Stromaufnahme eines Motors oder eine Drehzahl eines Motors oder eine Bahnspannung eines zu verarbeitenden Substrates oder ein seitlicher Verlauf eines zu verarbeitenden Substrates oder eine Registerabweichung verwendet werden.

Als zweite Größe 2 kann beispielsweise eine Produktionsgeschwindigkeit oder eine Druck-An-Stellung eines Druckzylinders oder ein Wartungsvorgang wie das Gummituchwaschen oder eine Aktivität eines Rollenwechslers oder eine Aktivität eines nachgeordneten Aggregates verwendet werden.

### Bezugszeichenliste

- 1: erste Größe
- 2: zweite Größe
- 3: dritte Größe

- 5: Anomalie
- 6: Schwellenwert

- 11: erste Datenpunkte
- 12: zweite Datenpunkte

- 20: Datensatz

- D: Zeitdauer
- d: Zeitintervall

## Patentansprüche

1. Computerimplementiertes Verfahren zur Auswertung von Daten, wobei das Verfahren umfasst:
Empfangen eines Datensatzes (20) von mindestens einer Komponente einer Druckmaschine oder einer druckverarbeitenden Maschine, wobei der Datensatz (20) eine erste Größe (1) mit einer Vielzahl von ersten Datenpunkten (11) und mindestens eine zweite Größe (2) mit einer Vielzahl von zweiten Datenpunkten (12) umfasst, Durchführen einer computerimplementierten Anomalieerkennung der ersten Datenpunkte (11) der ersten Größe (1) zur Ermittlung mindestens einer Anomalie (5), **dadurch gekennzeichnet, dass** bei der computerimplementierten Anomalieerkennung der ersten Datenpunkte (11) der ersten Größe (1) mindestens die zweiten Datenpunkte (12) der zweiten Größe (2) berücksichtigt werden.

2. Verfahren nach Anspruch 1, **dadurch gekennzeichnet, dass** die mindestens eine Anomalie (5) der ersten Größe (1) mit dem zugehörigen Datenpunkt (12) der mindestens zweiten Größe (2) angezeigt wird.

3. Verfahren nach einem der Ansprüche 1 oder 2, **dadurch gekennzeichnet, dass** der zeitliche Verlauf der ersten Größe (1) vor und/oder nach einer erkannten Anomalie (5) und der zeitliche Verlauf mindestens der zweiten Größe (2) vor und/oder nach einer erkannten Anomalie (5) dargestellt wird.

4. Verfahren nach einem der Ansprüche 1 bis 3, **dadurch gekennzeichnet, dass** die mindestens eine Anomalie (5) der ersten Größe (1) als Fehlermeldung gekennzeichnet wird, wenn diese einen vorbestimmten Schwellenwert (6) überschreitet.

5. Verfahren nach einem der Ansprüche 1 bis 4, **dadurch gekennzeichnet, dass** für die mindestens eine erkannte Anomalie (5) ein Analysedatensatz mit der ersten Größe (1) und der mindestens zweiten Größe (2) generiert wird.

6. Verfahren nach einen der Ansprüche 1 bis 5, **dadurch gekennzeichnet, dass** für die Anomalieerkennung ein KI-basiertes Softwaremodul verwendet wird.

7. Verfahren nach Anspruch 6, **dadurch gekennzeichnet, dass** das Kl-basierte Softwaremodul ein Autoencoder wie beispielsweise ein Dense-Autoencoder oder ein LSTM-Autoencoder oder ein Isolation Forest verwendet wird.

8. Verfahren nach einem der Ansprüche 1 bis 7, **dadurch gekennzeichnet, dass** zur Anomalieerkennung der Datensatz in eine Vielzahl von Zeitintervallen d unterteilt wird.

9. Verfahren nach Anspruch 8, **dadurch gekennzeichnet, dass** die Zeitintervalle d eine erste Zeitdauer d1 und/oder eine zweite Zeitdauer d2 und/oder eine dritte Zeitdauer d3 aufweisen.

10. Verfahren nach Anspruch 8, **dadurch gekennzeichnet, dass** die Zeitintervalle d eine erste Anzahl n1 und/oder eine zweite Anzahl n2 und/oder eine dritte Anzahl n3 von ersten Datenpunkten aufweisen.

11. Verfahren nach Anspruch 1, **dadurch gekennzeichnet, dass** die erste Größe (1) und/oder die mindestens zweite Größe (2) mittels Sensoren erfasst oder rechnerisch ermittelt werden.

12. Verfahren nach einem der Ansprüche 1 bis 11, **dadurch gekennzeichnet, dass** als erste Größe (1) ein Antriebsmoment eines Motors oder eine Stromaufnahme eines Motors oder eine Drehzahl eines Motors oder eine Bahnspannung eines zu verarbeitenden Substrates oder ein seitlicher Verlauf eines zu verarbeitenden Substrates oder eine Registerabweichung verwendet wird.

13. Verfahren nach einem der Ansprüche 1 bis 11, **dadurch gekennzeichnet, dass** als zweite Größe (2) eine Produktionsgeschwindigkeit oder eine Druck-An-Stellung eines Druckzylinders oder ein Wartungsvorgang wie das Gummituchwaschen oder eine Aktivität eines Rollenwechslers oder eine Aktivität eines nachgeordneten Aggregates verwendet wird.
